# FASCICULE DE BREVET EUROPEEN

(11) **EP 3 699 115 B1**
(45) Date de publication et mention de la délivrance du brevet: **22.11.2023**
(21) Numéro de dépôt: 20158562.7
(22) Date de dépôt: 20.02.2020
(51) Int. Cl.: B65G 43/00, B65G 21/00, B65G 47/66

(54) **SYSTÈME DE SÉCURITÉ ANTI-COINCEMENT ENTRE L'EXTRÉMITÉ D'UN CONVOYEUR À BANDE ET UNE TABLE DE DÉCHARGE DISPOSÉE EN BOUT DUDIT CONVOYEUR À BANDE, ET MACHINE INDUSTRIELLE L'INCORPORANT**
SICHERHEITSSYSTEM GEGEN DAS EINKLEMMEN AM ENDE EINES BANDFÖRDERERS UND EINES AM ENDE DIESES BANDFÖRDERERS BEFINDLICHEN ENTLADETISCHS, UND INDUSTRIEMASCHINE, DIE DIESES SICHERHEITSSYSTEM UMFASST
ANTI-JAMMING SAFETY SYSTEM BETWEEN THE END OF A CONVEYOR BELT AND A DISCHARGE TABLE ARRANGED AT THE END OF SAID CONVEYOR BELT, AND INDUSTRIAL MACHINE INCLUDING SAME

(30) Priorité: 25.02.2019 FR 1901865
(43) Date de publication de la demande: 26.08.2020
(73) Titulaire: PSA Automobiles SA, 78300 Poissy (FR)
(72) Inventeur: FERNANDEZ, Cesareo, 36213 Vigo Pontevedra (ES); CARRETE, Jose Antonio, 36209 VIGO (Pontevedra) (ES)

(56) Documents cités:
- WO-A1-2015/198274
- DE-A1-102009 018 215
- US-A- 3 129 804

## Description

### DOMAINE TECHNIQUE

La présente invention se rapporte de manière générale au domaine des machines industrielles, et plus particulièrement à un système de sécurité anti-coincement entre l'extrémité d'un convoyeur à bande et une table de décharge disposée en bout dudit convoyeur à bande, ainsi qu'à une machine industrielle l'incorporant.

### Etat de la technique

Les convoyeurs à bande sont des équipements très répandus dans les machines industrielles, notamment les chaînes de production d'objets à échelle industrielle.

Dans l'industrie automobile, une chaîne d'emboutissage peut comprendre un convoyeur à bande pour transporter des pièces de ferrage, comme des pièces de renforts, des brides, des équerres, des tirants, etc., jusqu'à une table de décharge où un opérateur effectue un tri et/ou une inspection des pièces sorties des presses d'emboutissage.

Dans certaines configurations, l'extrémité d'une table de décharge est disposée en bout d'un convoyeur à bande, un plateau horizontal de la table venant sensiblement à la même hauteur que la bande de transport du convoyeur à bande au niveau de l'extrémité avant dudit convoyeur à bande. Il peut arriver qu'un objet s'introduise entre le rouleau avant du convoyeur à bande et l'extrémité adjacente de la table de décharge. En cas de coincement d'un objet métallique comme les pièces de ferrage précitées, il existe un risque d'endommagement de la bande de transport par l'objet.

On connaît des systèmes de sécurité anti-coincement, qui sont utilisés pour prévenir le coincement d'objets au niveau du rouleau à l'extrémité avant d'un convoyeur à bande. Le brevet européen EP 0293516 décrit par exemple un dispositif pour éviter les accidents par engagement involontaire d'un objet non autorisé dans des interstices situés en entrée ou sortie d'un convoyeur à bande, grâce à un élément de recouvrement fixé à un support. Le document DE 10 2009 018215 A1 décrit une autre machine industrielle selon le préambule de la revendication 1.

### Résumé de l'invention

L'invention vise à améliorer la sécurité pour prévenir le coincement d'objets entre l'extrémité avant d'un convoyeur à bande ayant une bande de transport sensiblement horizontale, d'une part, et l'extrémité d'une table de décharge disposée en bout dudit convoyeur à bande et ayant un plateau horizontal sensiblement à la même hauteur que la bande de transport du convoyeur à bande au niveau de l'extrémité avant dudit convoyeur à bande, d'autre part.

A cet effet, l'invention propose une machine industrielle comprenant un convoyeur à bande ayant une bande de transport sensiblement horizontale, une table de décharge disposée en bout dudit convoyeur à bande et ayant un plateau horizontal sensiblement à la même hauteur que la bande de transport du convoyeur à bande au niveau d'une extrémité avant dudit convoyeur à bande, et un système de sécurité pour prévenir le coincement d'objets entre l'extrémité avant du convoyeur à bande, d'une part, et l'extrémité avant de la table de décharge. Le système de sécurité comprend :
- un châssis avec une partie verticale, qui est monté pivotant autour d'un axe transversal de pivotement lié au piétement de la table de décharge ;
- un bâti transversal interne et un bâti transversal externe, coulissant l'un dans l'autre suivant une direction longitudinale, dont l'un est fixé rigidement à l'extrémité de la table de décharge, et dont l'autre est solidaire du châssis et prend place à l'extrémité avant du convoyeur à bande, de manière adjacente à la bande de transport du convoyeur à bande ;
- et un capteur réagissant au pivotement du châssis vers l'avant, pour générer un signal d'arrêt de l'entraînement de la bande de transport du convoyeur à bande.

Grâce à l'invention, il est possible de transformer le mouvement de translation du bâti coulissant par rapport au bâti dormant qui se produit lorsqu'un objet se coince entre la bande de transport à l'extrémité avant du convoyeur et le bâti coulissant, en venant exercer une force d'orientation sensiblement horizontale contre ce bâti coulissant, en un mouvement vertical de la partie verticale du châssis, orienté par exemple de haut en bas, plus facilement détectable avec le capteur.

Des modes de réalisation pris isolément ou en combinaison, prévoient en outre que :
- l'axe transversal de pivotement peut être situé en bas du piétement de la table de décharge, ce qui donne un effet de bras de levier qui réduit l'amplitude du mouvement vertical du bas du châssis, par rapport au mouvement horizontal du bâti coulissant en haut du châssis, en rendant la détection plus robuste ;
- l'axe transversal de pivotement peut être déporté vers l'arrière par rapport au plan vertical dans lequel se situent le bâti interne et le bâti externe, ce qui provoque le basculement du bâti coulissant vers l'avant, en sorte que, avantageusement le bord arrière du bâti coulissant se soulève par rapport à la bande de transport, libérant ainsi les efforts sur cette bande dus au coincement de l'objet ;
- le châssis peut comprendre en outre une partie horizontale, laquelle partie horizontale est solidaire de la partie verticale du châssis dont elle constitue une extension horizontale vers l'arrière, à partir du bas de la partie verticale du châssis, et sur laquelle sont montés au moins deux paliers pour l'axe transversal de pivotement ;
- le système peut comprendre en outre des butées réglables en hauteur, pour limiter le débattement suivant la verticale de la partie horizontale du châssis horizontal, vers l'avant et/ou vers l'arrière, lors du pivotement du châssis autour de l'axe transversal de pivotement, ce qui permet d'éviter d'endommager le capteur, notamment pour les butées avant ;
- le système peut comprendre en outre au moins un vérin dont une extrémité est fixée sur un montant de la partie verticale du châssis, et dont l'autre extrémité est liée au piètement de la table de décharge ; en combinaison avec les butées arrière, ces vérins ramènent le châssis dans une position de repos qui est réglable par lesdites butées. En outre, les vérins introduisent un amortissement du mouvement de pivotement du châssis, qui limite les à-coups et protège le capteur, notamment ;
- le capteur peut être un capteur électromécanique, de conception simple, et peu cher, et de robustesse supérieure à des dispositifs plus complexes, notamment optiques ou magnétiques, auquel l'homme de l'art pourrait penser par ailleurs ;
- le bâti transversal interne peut être fixé rigidement à l'extrémité de la table de décharge, et le bâti transversal externe peut être solidaire du châssis.

Par exemple, le convoyeur à bande comprend un rouleau au niveau de l'extrémité avant de la bande de transport, qui est un simple rouleau de renvoi, et un groupe d'entraînement de la bande d'entraînement qui est en arrière de ladite extrémité arrière de la bande de transport. Ainsi, le rouleau d'extrémité avant est libre de tout mécanisme d'entraînement qui pourrait gêner la mise en oeuvre du système de sécurité.

L'invention porte aussi sur un système de sécurité pour prévenir le coincement d'objets entre l'extrémité avant d'un convoyeur à bande ayant une bande de transport sensiblement horizontale, d'une part, et l'extrémité d'une table de décharge disposée en bout dudit convoyeur à bande et ayant un plateau horizontal sensiblement à la même hauteur que la bande de transport du convoyeur à bande au niveau de l'extrémité avant dudit convoyeur à bande, d'autre part. Le système comprend :
- un châssis avec une partie dite verticale, qui est monté pivotant autour d'un axe transversal de pivotement ;
- un bâti transversal interne et un bâti transversal externe, coulissant l'un dans l'autre suivant une direction longitudinale, dont l'un comprend des moyens de fixation pour être fixé rigidement à l'extrémité de la table de décharge, et dont l'autre est solidaire du châssis et est destiné à prendre place à l'extrémité avant du convoyeur à bande, de manière adjacente à la bande de transport du convoyeur à bande ; et,
- un capteur réagissant au pivotement du châssis vers l'avant en générant un signal.

### Brève description des figures

D'autres caractéristiques et avantages de l'invention apparaîtront encore à la lecture de la description qui va suivre. Celle-ci est purement illustrative et doit être lue en regard des dessins annexés sur lesquels :
**[****Fig. 1****]** est une vue de côté en trois dimensions d'un système selon l'invention, agencé entre l'extrémité avant d'un convoyeur à bande et l'extrémité d'une table de décharge, pour une position de repos du système c'est-à-dire en l'absence de coincement d'un objet à l'extrémité de la bande de transport ;
**[****Fig. 2****]** est une vue en trois dimensions du système de sécurité seul ;
**[****Fig. 3****]** est sensiblement la même vue que la Figure 1, mais en présence d'un objet coincé à l'extrémité de la bande de transport, qui provoque le basculement du bâti coulissant et donc le pivotement du châssis ; et,
**[****Fig. 4****]** est une vue de détail montrant la coopération entre le châssis et le capteur électromécanique.

### Description des modes de réalisation

Dans la description de modes de réalisation qui va suivre et dans les Figures des dessins annexés, les mêmes éléments ou des éléments similaires portent les mêmes références numériques aux dessins.

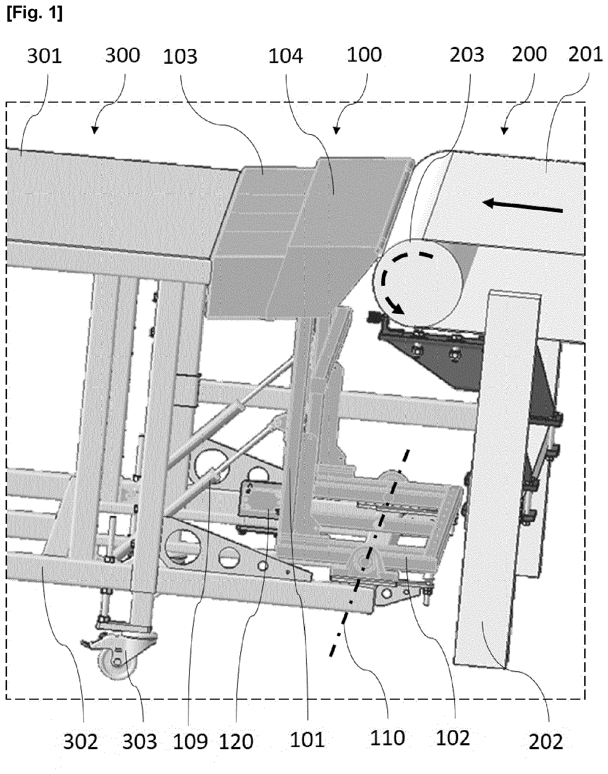

En référence à la **figure 1****,** le système de détection de coincement 100 selon des modes de réalisation de l'invention, est adapté pour être disposé entre l'extrémité avant d'un convoyeur à bande 200 et une table de décharge 300.

Les convoyeurs à bande sont caractérisés par le type de bande transporteuse utilisée (matériaux, texture, épaisseur) et par la position du groupe de motorisation (central ou en extrémité).

Le convoyeur 200 montré à la figure 1 comprend une bande transporteuse 201, un châssis porteur 202 avec une sole de glissement (non représentée) qui assure le soutien de la bande, un rouleau d'extrémité avant 203, et un tambour d'entraînement équipé d'un motoréducteur (non représenté).

A la figure, une flèche en trait pointillé indique le sens de rotation du rouleau d'extrémité avant 203, et une flèche en trait continu indique le sens de défilement de la bande 201. Les termes « avant » et « arrière », ainsi que leurs dérivés « en-avant » et « en-arrière », sont utilisés dans le présent exposé en référence à ce sens de défilement de la bande 201.

On notera que le tambour de commande du convoyeur 200 peut être logé dans le rouleau d'extrémité 203, auquel cas ce rouleau est un rouleau d'entraînement. Mais le tambour d'entraînement est de préférence logé dans un rouleau d'extrémité arrière (non représenté), ou en position centrale c'est-à-dire entre l'extrémité arrière et l'extrémité avant du convoyeur. Le rouleau avant, de même que le rouleau arrière le cas échéant, agissent uniquement comme des rouleaux de renvoi. Ainsi, l'extrémité avant et, le cas échant également l'extrémité arrière, n'ont aucun contour susceptible de gêner l'environnement de la machine. Cela permet d'installer la machine dans des environnement avec contrainte d'espace au niveau de chacune des extrémités du convoyeur. Lorsque le tambour est disposé en position centrale, il comprend en général une poulie d'entraînement et deux poulies de contre-enroulement entre lesquels la bande circule.

La table de décharge 300 comprend un plateau 301 monté fixement sur un châssis porteur 302. Le châssis porteur 302 est généralement équipé de roulettes afin de permettre le déplacement aisé de la table dans l'atelier. Certaines au moins desdites roulettes, comme la roulette 303 représentée, sont équipées d'un frein qui permet de les bloquer afin d'immobiliser la table.

Dans le contexte de l'invention, l'extrémité avant du convoyeur à bande 200 est située sensiblement à la même hauteur que le plateau 301 de la table de décharge 300. De la sorte, les objets convoyés sont transférés, sans chute, depuis la bande 201 du convoyeur 200 sur le plateau 301 de la table 300. La hauteur par rapport au sol du plateau 301 de la table 300 est par exemple une hauteur, dite « hauteur de travail », permettant à au moins un opérateur qui se tient en station debout ou assis auprès de la table 300, de collecter les objets déposés sur la table 300 par le convoyeur 200 afin de, par exemple, les trier et/ou de les inspecter. Cette hauteur de travail est typiquement comprise entre 70 et 130 centimètres (cm), plus spécialement entre 80 et 90 cm pour une station debout de l'opérateur.

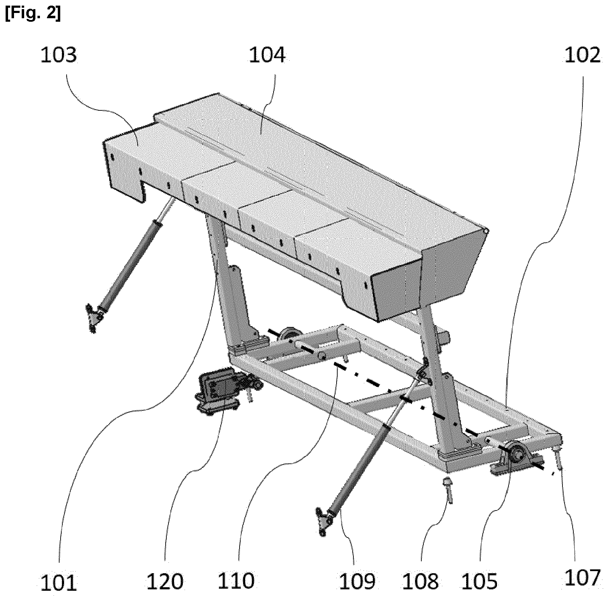

En référence en outre à la **figure 2****,** on va maintenant décrire les principaux éléments constitutifs du système selon des modes de réalisation. A la figure 2, le système 100 de la figure 1 est représenté de manière isolée, c'est-à-dire sans le convoyeur 200 et sans la table de décharge 300.

Le système 100 comprend un châssis avec une partie verticale 101 et de préférence également une partie horizontale 102. La partie horizontale 102 est solidaire de la partie verticale 101 du châssis, dont elle constitue une extension horizontale vers l'arrière, à partir du bas de la partie verticale du châssis. Par exemple, ces deux parties sont des cadres qui, individuellement et ensemble, sont formées par un assemblage de profilés mécano-soudés.

Le châssis 101,102 est monté pivotant autour d'un axe transversal de pivotement 110, qui est destiné à être lié au piétement 302 de la table de décharge. A cet effet, des paliers 105 pour l'axe transversal de pivotement 110 sont montés solidaires du piétement 302 de la table de décharge, et coopèrent avec des pivots solidaires de la partie horizontale 102 du châssis. On peut aussi prévoir, inversement, des paliers sur la partie horizontale du châssis qui coopèrent avec des pivots solidaires du piétement de la table de décharge.

Le système comprend aussi un bâti transversal interne 103 et un bâti transversal externe 104, coulissant l'un dans l'autre suivant une direction longitudinale, c'est-à-dire suivant la direction de défilement de la bande de transport.

Dans un exemple, le bâti interne 103 est destiné à être fixé rigidement à l'extrémité de la table de décharge 300, par exemple à l'aide de moyens de fixation de type vis-écrou. Il est donc le bâti dormant. Le bâti externe 104 est solidaire du châssis, en étant par exemple fixé en haut de la partie verticale 101 du châssis. Il est donc le bâti coulissant. Ce bâti externe 104 est destiné à prendre place à l'extrémité avant du convoyeur à bande 200, de manière adjacente à la bande de transport 201 dudit convoyeur à bande. Ainsi, si un objet 1 se coince entre la bande de transport et le bâti externe 104, ce-dernier coulisse longitudinalement autour du bâti dormant 103 coulissant, et se déplace donc vers l'avant.

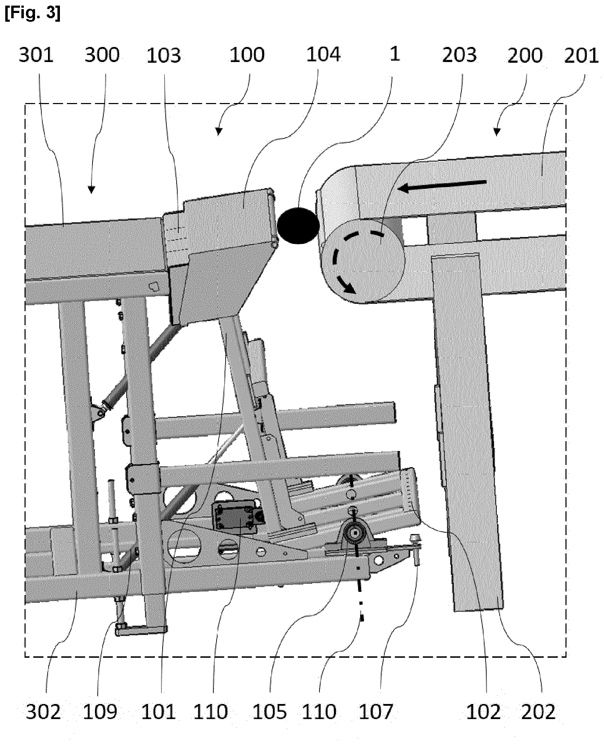

Cette position est celle qui est représentée à la **figure 3****.**

On notera que, inversement, le bâti dormant peut être le bâti externe, et le bâti interne peut être le bâti coulissant. Dans les deux cas, un certain jeu doit exister afin de permettre le basculement vers l'avant du bâti coulissant en cas de coincement d'un objet entre ce bâti coulissant et la bande de transport 201 du convoyeur 200, sans qu'il soit empêché par un contact antre les deux bâtis 103 et 104.

Le système comprend par ailleurs un capteur 120 réagissant au pivotement du châssis vers l'avant, pour générer un signal d'arrêt de l'entraînement de la bande de transport du convoyeur à bande. Dans un mode de réalisation avantageux, le capteur 120 est un capteur électromécanique, de conception simple, peu cher, et fiable.

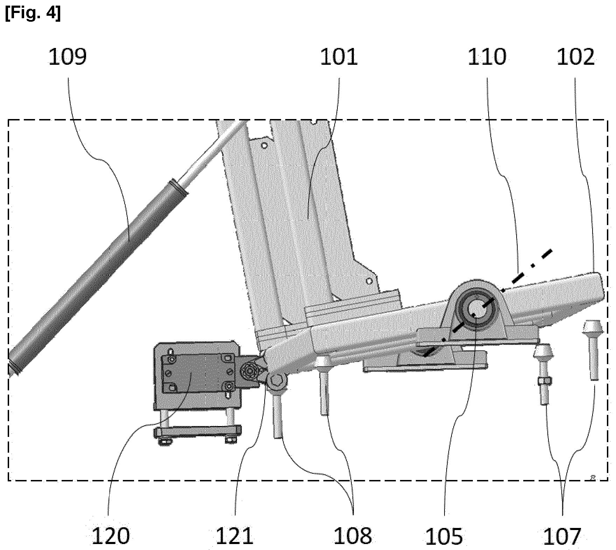

Comme il est montré à la **figure 4****,** le capteur 120 peut comprendre un levier d'actionnement 121, qui coopère avec un montant transversal de la partie horizontale 102 du châssis, donc en bas du châssis.

Le fait que l'axe transversal de pivotement 105 soit situé en bas du piétement 302 de la table de décharge permet une réduction de l'amplitude du mouvement de translation longitudinale du bâtir coulissant 104 par rapport au bâti dormant 103, après transformation en un mouvement de déplacement vertical du montant transversal en bas du châssis. Le système permet donc de détecter le coincement d'objets de tailles variables, qui sont susceptible de s'engager entre le bâti 104 et la bande de transport 201.

On notera en outre que le fait que le bâti coulissant 104 se déplace vers l'avant permet de réduire la force de réaction qu'il exerce sur la bande de transport, à travers l'objet coincé 1. Le risque d'endommagement de la bande de transport est donc réduit.

Cet avantage est également procuré, en combinaison, par le fait que le bâti coulissant 104 peut basculer vers l'avant en cas de coincement, ce basculement étant obtenu par le fait que l'axe transversal de pivotement 150 est préférentiellement déporté vers l'arrière, par rapport au plan vertical dans lequel se situent le bâti interne 103 et le bâti externe 104, comme on peut le voir sur les figures 1 et 3.

Dans un mode de réalisation, particulièrement visible à la figure 4, le système comprend en outre des butées arrière 107 coopérant avec l'arrière du cadre horizontal 102, et/ou des butées avant 108 coopérant avec l'avant du cadre horizontal 102. Ces butées 107 et 108 sont réglables en hauteur, pour limiter le débattement suivant la verticale de la partie horizontale du châssis horizontal, vers l'arrière et/ou vers l'avant, respectivement, lors du pivotement du châssis autour de l'axe transversal de pivotement.

Les butées avant 108 permettent de protéger le capteur électromécanique 120, en empêchant un débattement trop important du châssis sur le levier 1201 du capteur.

Les butées arrière 107 permettent de régler la position de repos du système (c'est-à-dire en l'absence de coincement d'un objet), en combinaison avec au moins un vérin de rappel 109. Une extrémité du vérin est fixée par exemple sur un montant de la partie verticale 101 du châssis, et son autre extrémité est destinée à être liée au piètement 302 de la table de décharge 300, comme montré sur les figures 1 et 3.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Machine industrielle comprenant :
- un convoyeur à bande (200) ayant une bande de transport (201) sensiblement horizontale ;
- une table de décharge (300) disposée en bout dudit convoyeur à bande et ayant un plateau horizontal (301) sensiblement à la même hauteur que la bande de transport du convoyeur à bande au niveau d'une extrémité avant dudit convoyeur à bande ;
- et un système de sécurité (100) pour prévenir le coincement d'objets (1) entre l'extrémité avant du convoyeur à bande (200), d'une part, et l'extrémité avant de la table de décharge (300),
la machine industrielle étant **caractérisé en ce que** le système de sécurité comprend :
- un châssis (101,102) avec une partie verticale (101), qui est monté pivotant autour d'un axe transversal de pivotement (110) lié au piétement (302) de la table de décharge ;
- un bâti transversal interne (103) et un bâti transversal externe (104), coulissant l'un dans l'autre suivant une direction longitudinale, dont l'un est fixé rigidement à l'extrémité de la table de décharge, et dont l'autre est solidaire du châssis et prend place à l'extrémité avant du convoyeur à bande, de manière adjacente à la bande de transport du convoyeur à bande ; et,
- un capteur (120) réagissant au pivotement du châssis vers l'avant, pour générer un signal d'arrêt de l'entraînement de la bande de transport du convoyeur à bande.

2. Machine selon la revendication 1, dans laquelle l'axe transversal de pivotement est situé en bas du piétement de la table de décharge.

3. Machine selon la revendication 1 ou la revendication 2, dans laquelle l'axe transversal de pivotement est déporté vers l'arrière par rapport au plan vertical dans lequel se situent le bâti interne et le bâti externe.

4. Machine selon l'une quelconque des revendications précédentes, dans laquelle le châssis comprend en outre une partie horizontale (102), laquelle partie horizontale est solidaire de la partie verticale du châssis dont elle constitue une extension horizontale vers l'arrière, à partir du bas de la partie verticale du châssis, et sur laquelle sont montés au moins deux paliers (105) pour l'axe transversal de pivotement.

5. Machine selon la revendication 4, dans laquelle le système de sécurité (100) comprend en outre des butées (107,108) réglables en hauteur, pour limiter le débattement suivant la verticale de la partie horizontale du châssis horizontal, vers l'avant et/ou vers l'arrière, lors du pivotement du châssis autour de l'axe transversal de pivotement.

6. Machine selon l'une quelconque des revendications précédentes, dans laquelle le système de sécurité (100) comprend en outre au moins un vérin (109) dont une extrémité est fixée sur un montant de la partie verticale du châssis, et dont l'autre extrémité est liée au piètement de la table de décharge.

7. Machine selon l'une quelconque des revendications précédentes, dans laquelle le capteur est un capteur électromécanique.

8. Machine selon la revendication 1, dans laquelle le bâti transversal interne (103) est fixé rigidement à l'extrémité de la table de décharge (300), et dans lequel le bâti transversal externe (104) est solidaire du châssis (101,102).

9. Machine industrielle selon l'une des revendications précédentes, dans laquelle le convoyeur à bande comprend un rouleau (203) au niveau de l'extrémité avant de la bande de transport, qui est un simple rouleau de renvoi, et un groupe d'entraînement de la bande d'entraînement qui est en arrière de ladite extrémité arrière de la bande de transport.

10. Système de sécurité pour prévenir le coincement d'objets (1) entre l'extrémité avant d'un convoyeur à bande (200) ayant une bande de transport (201) sensiblement horizontale, d'une part, et l'extrémité d'une table de décharge (300) disposée en bout dudit convoyeur à bande et ayant un plateau horizontal (301) sensiblement à la même hauteur que la bande de transport du convoyeur à bande au niveau de l'extrémité avant dudit convoyeur à bande, d'autre part, le système étant **caractérisé en ce qu'**il comprend :
- un châssis (101,102) avec une partie dite verticale (101), qui est monté pivotant autour d'un axe transversal de pivotement (110);
- un bâti transversal interne (103) et un bâti transversal externe (104), coulissant l'un dans l'autre suivant une direction longitudinale, dont l'un comprend des moyens de fixation pour être fixé rigidement à l'extrémité de la table de décharge, et dont l'autre est solidaire du châssis et est destiné à prendre place à l'extrémité avant du convoyeur à bande, de manière adjacente à la bande de transport du convoyeur à bande ; et,
- un capteur (120) réagissant au pivotement du châssis vers l'avant en générant un signal d'arrêt de l'entraînement de la bande de transport du convoyeur à bande.

## Patentansprüche

1. Industrielle Maschine mit:
- ein Förderband (200) mit einem im Wesentlichen horizontalen Förderband (201);
- einen Austragstisch (300), der am Ende des Bandförderers angeordnet ist und eine horizontale Platte (301) aufweist, die im Wesentlichen auf der gleichen Höhe wie das Förderband des Bandförderers an einem vorderen Ende des Bandförderers liegt;
- und ein Sicherheitssystem (100), um das Einklemmen von Gegenständen (1) zwischen dem vorderen Ende des Bandförderers (200) einerseits und dem vorderen Ende des Austragtisches (300) andererseits zu verhindern,
Industrielle Maschine, **dadurch gekennzeichnet, dass** das Sicherheitssystem umfasst:
- ein Gestell (101,102) mit einem vertikalen Teil (101), das um eine mit dem Fuß (302) des Austragtisches verbundene Querschwenkachse (110) schwenkbar gelagert ist;
- einem inneren Quergestell (103) und einem äußeren Quergestell (104), die in Längsrichtung ineinander gleiten, von denen das eine am Ende des Austragstisches starr befestigt ist und das andere mit dem Gestell fest verbunden ist und am vorderen Ende des Bandförderers neben dem Förderband des Bandförderers Platz nimmt, und
- einen Sensor (120), der auf die Vorwärtsschwenkung des Rahmens anspricht, um ein Signal für den Stopp des Förderbandantriebs des Förderbandes zu erzeugen.

2. Maschine nach Anspruch 1, bei der die Schwenkquerachse unten am Fuß des Austragtisches angeordnet ist.

3. Maschine nach Anspruch 1 oder Anspruch 2, bei der die Schwenkquerachse in Bezug auf die vertikale Ebene, in der sich der innere Rahmen und der äußere Rahmen befinden, nach hinten versetzt ist.

4. Maschine nach einem der vorhergehenden Ansprüche, bei der der Rahmen ferner einen horizontalen Abschnitt (102) aufweist, der mit dem vertikalen Abschnitt des Rahmens fest verbunden ist, dessen horizontale Verlängerung sich von unten des vertikalen Abschnitts des Rahmens nach hinten erstreckt, und an dem wenigstens zwei Lager (105) für die Schwenkquerachse angebracht sind.

5. Maschine nach Anspruch 4, wobei das Sicherheitssystem (100) ferner höhenverstellbare Anschläge (107, 108) aufweist, um die vertikale Bewegung des horizontalen Abschnitts des Rahmens nach vorne und/oder nach hinten beim Schwenken des Rahmens um die Schwenkquerachse zu begrenzen.

6. Maschine nach einem der vorhergehenden Ansprüche, bei der das Sicherheitssystem (100) ferner mindestens einen Zylinder (109) aufweist, dessen eines Ende an einem Pfosten des vertikalen Abschnitts des Rahmens befestigt ist und dessen anderes Ende mit der Grundplatte des Austragtisches verbunden ist.

7. Maschine nach einem der vorhergehenden Ansprüche, bei der der Sensor ein elektromechanischer Sensor ist.

8. Maschine nach Anspruch 1, wobei der innere Querrahmen (103) starr an dem Ende des Austragtisches (300) befestigt ist und wobei der äußere Querrahmen (104) mit dem Rahmen (101, 102) einstückig ist.

9. Industrielle Maschine nach einem der vorhergehenden Ansprüche, wobei der Bandförderer eine Rolle (203) am vorderen Ende des Transportbandes, die eine einfache Umlenkrolle ist, und eine Antriebsgruppe für das Antriebsband, die hinter dem hinteren Ende des Transportbandes liegt, umfasst.

10. Sicherheitssystem zum Verhindern des Einklemmens von Gegenständen (1) zwischen dem vorderen Ende eines Bandförderers (200) mit einem im Wesentlichen horizontalen Förderband (201) einerseits und dem Ende eines Austragtisches (300), der am Ende des Bandförderers angeordnet ist und eine horizontale Platte (301) aufweist, die im Wesentlichen auf der gleichen Höhe wie das Förderband des Bandförderers an dem vorderen Ende des Bandförderers liegt, andererseits, wobei das System **dadurch gekennzeichnet ist, dass** es umfasst:
- einem Rahmen (101,102) mit einem so genannten vertikalen Teil (101), der um eine Schwenkquerachse (110) schwenkbar gelagert ist;
- einem inneren Quergestell (103) und einem äußeren Quergestell (104), die in Längsrichtung ineinander gleiten, von denen eines Befestigungsmittel zur festen Befestigung am Ende des Austragstisches aufweist und das andere mit dem Gestell fest verbunden ist und dazu bestimmt ist, am vorderen Ende des Bandförderers neben dem Förderband des Bandförderers Platz zu nehmen, und
- einen Sensor (120), der auf die Vorwärtsschwenkung des Rahmens reagiert und ein Signal erzeugt, um den Antrieb des Förderbandes zu stoppen.

## Claims

1. Industrial machine comprising:
- a belt conveyor (200) having a substantially horizontal conveyor belt (201);
- an unloading table (300) arranged at the end of said belt conveyor and having a horizontal plate (301) substantially at the same height as the belt conveyor, conveyor belt at a front end of said belt conveyor;
- and a safety system (100) for preventing the jamming of objects (1) between the front end of the belt conveyor (200) on the one hand and the front end of the discharge table (300),
industrial machinery being **characterized in that** the safety system comprises:
- a frame (101,102) with a vertical part (101), which is mounted pivotably about a transverse pivot axis (110) connected to the underframe (302) of the discharge table;
- an inner transverse frame (103) and an outer transverse frame (104), sliding one in the other in a longitudinal direction, one of which is rigidly fixed to the end of the discharge table, and the other of which is integral with the chassis and takes place at the front end of the belt conveyor, adjacent to the belt conveyor conveyor conveyor belt; and,
- a sensor (120) responsive to the forward pivoting of the chassis to generate a belt conveyor belt drive stop signal.

2. Machine according to claim 1, in which the transverse pivot axis is situated at the bottom of the underframe of the discharge table.

3. Machine according to claim 1 or Claim 2, in which the transverse pivot axis is offset rearwards with respect to the vertical plane in which the inner frame and the outer frame are situated.

4. Machine according to any one of the preceding claims, in which the chassis further comprises a horizontal part (102), which horizontal part is integral with the vertical part of the chassis of which it constitutes a horizontal extension towards the rear, from the bottom of the vertical part of the chassis, and on which are mounted at least two bearings (105) for the transverse pivot axis.

5. Machine according to claim 4, in which the safety system (100) also comprises stops (107, 108) which can be adjusted in height, in order to limit the vertical movement of the horizontal part of the chassis, towards the front and/or towards the rear, during the pivoting of the chassis about the transverse pivot axis.

6. Machine according to any one of the preceding claims, in which the safety system (100) further comprises at least one jack (109), one end of which is fixed to an upright of the vertical part of the chassis, and the other end of which is connected to the underframe of the discharge table.

7. Machine according to any one of the preceding claims, in which the sensor is an electromechanical sensor.

8. Machine according to claim 1, in which the inner transverse frame (103) is rigidly fixed to the end of the discharge table (300), and in which the outer transverse frame (104) is integral with the frame (101, 102).

9. An industrial machine according to any preceding claim, in which the belt conveyor comprises a roller (203) at the front end of the conveyor belt, which is a single return roller, and a drive group for the drive belt which is behind said rear end of the conveyor belt.

10. Safety system for preventing the jamming of objects (1) between the front end of a belt conveyor (200) having a substantially horizontal conveyor belt (201) on the one hand, and the end of a discharge table (300) arranged at the end of said belt conveyor and having a horizontal plate (301) substantially at the same height as the conveyor belt conveyor belt at the front end of said belt conveyor, on the other hand, the system being **characterized in that** it comprises:
- a frame (101, 102) with a so-called vertical part (101), which is mounted pivotably about a transverse pivot axis (110);
- an inner transverse frame (103) and an outer transverse frame (104), sliding one in the other in a longitudinal direction, one of which comprises fixing means to be rigidly fixed to the end of the discharge table, and the other of which is integral with the frame and is intended to be placed at the front end of the belt conveyor, adjacent to the belt conveyor; and,
- a sensor (120) responsive to the forward pivoting of the chassis by generating a belt conveyor belt drive stop signal.
